# EUROPEAN PATENT SPECIFICATION

(11) **EP 1 501 626 B1**
(45) Date of publication and mention of the grant of the patent: **10.09.2008**
(21) Application number: 03726399.3
(22) Date of filing: 22.04.2003
(51) Int. Cl.: B01F 3/08, B01F 13/00, B01F 5/06

(54) **DEVICE AND METHOD OF CREATING HYDRODYNAMIC CAVITATION IN FLUIDS**
VORRICHTUNG UND VERFAHREN ZUR ERZEUGUNG VON HYDRODYNAMISCHER KAVITATION IN FLUIDEN
DISPOSITIF ET PROCEDE DE CREATION DE CAVITATION HYDRODYNAMIQUE DANS DES FLUIDES

(30) Priority: 22.04.2002 US 131512
(43) Date of publication of application: 02.02.2005
(73) Proprietor: Five Star Technologies, Inc., Cleveland, Ohio 44142 (US)
(72) Inventor: KOZYUK, Oleg, V., Westlake, OH 44145 (US)
(74) Representative: Crawford, Andrew Birkby
(86) International application number: PCT/US2003/012410
(87) International publication number: WO 2003/089122

(56) References cited:
- EP-A1- 0 852 906
- EP-A2- 0 260 564
- EP-A2- 0 863 173
- US-A- 1 496 858
- US-A- 2 137 338
- US-A- 3 849 074
- US-A- 4 996 004
- US-A- 5 723 518

## Description

### BACKGROUND OF THE INVENTION

### Field of Invention

The present invention relates to a device and method for creating hydrodynamic cavitation in fluids. This device and method according to the present invention may find application in mixing, synthesis, assisting in chemical reactions, and sonochemical reactions in the chemical, food, pharmaceuticals, cosmetics processing, and other types of industry.

### Description of the Related Art

Cavitation is the formation of bubbles and cavities within a liquid stream resulting from a localized pressure drop in the liquid flow. If the pressure at some point decreases to a magnitude under which the liquid reaches the boiling point for this fluid, then a great number of vapor-filled cavities and bubbles are formed. As the pressure of the liquid then increases, vapor condensation takes place in the cavities and bubbles, and they collapse, creating very large pressure impulses and very high temperatures. According to some estimations, the temperature within the bubbles attains a magnitude on the order of 5000°C and a pressure of approximately 500 kg/cm². Cavitation involves the entire sequence of events beginning with bubble formation through the collapse of the bubble. Because of this high energy level, cavitation has been studied for its ability to mix materials and aid in chemical reactions.

There are several different ways to produce cavitation in a fluid. The way known to most people is the cavitation resulting from a propeller blade moving at a critical speed through water. If a sufficient pressure drop occurs at the blade surface, cavitation will result. Likewise, the movement of a fluid through a restriction such as an orifice plate can also generate cavitation if the pressure drop across the orifice is sufficient. Both of these methods are commonly referred to as hydrodynamic cavitation. Cavitation may also be generated in a fluid by the use of ultrasound. A sound wave consists of compression and decompression cycles. If the pressure during the decompression cycle is low enough, bubbles may be formed. These bubbles will grow during the decompression cycle and contract or even implode during the compression cycle.

Both of these methods of cavitation to enhance mixing or aid in chemical reactions have had mixed results, mainly due to the inability to adequately control cavitation. U.S. Pat. Nos. 5,810,052, 5,931,771 and 5,937,906 to Kozyuk disclose an improved device capable of controlling the many variables associated with cavitation.

Of relevance to the present invention are U.S. Patent Nos. 5,466,646 and 5,417,956 to Moser which disclose the use of high shear followed by cavitation to produce metal based materials of high purity and improved nanosize. While the results disclosed in these patents are improved over the past methods of preparation, the inability to control the cavitation effects limit the results obtained.

Furthermore, U.S. Patent No. 5,931,771 introduced a method of producing ultra-thin emulsions and dispersions, which in accordance with the invention is comprised of the passage of a hydrodynamic liquid flow containing dispersed components through a flow-through channel. internally having at least one nozzle. Located after the nozzle and along the stream is a buffer channel which is directed by its open end in the nozzle side. Inside the nozzle, a high velocity primary liquid jet, which enters into the buffer channel at a minimal distance from the nozzle. In the buffer channel, flowing out from this channel, a secondary liquid jet is formed, which moves in the buffer channel towards the primary jet and forms with the surface of the primary jet a high intensity vortex contact layer. In the high intensity vortex contact layer, collapsing cavitation caverns and bubbles are generated which disperse emulsions and dispersions to submicron sizes.

In addition, the invention of U.S. Patent No. 5,720,551 features a method for use in causing emulsification in a fluid. In the method, a jet of fluid is directed along a first path, and a structure is interposed in the first path to cause the fluid to be redirected in a controlled flow along a new path, the first path and the new path being oriented to cause shear and cavitation in the fluid. The first path and the new path may be oriented in essentially opposite directions. The coherent flow may he a cylinder surrounding the jet. The interposed structure may have a reflecting surface that is generally semi-spherical, or is generally tapered, and lies at the end of a well. Adjustments may be made to the pressure in the well, in the distance from the opening of the well to the reflecting surface, and in the size of the opening to the well. The controlled flow, as it exits the well, may be directed in an annular sheet away from the opening of the well. An annular flow of a coolant may be directed in a direction opposite to the direction of the annular sheet.

According to the invention of U.S. Patent No. 6,227,694, a method for causing a reaction between two or more reactive substances comprises the step of colliding a flow of one reactive substance against a flow of another reactive substance at a high flow rate to cause a reaction between them. Furious turbulence and cavitation occur when the jet flows collide together at high speeds.

US-A-2137338 discloses an apparatus for producing foam for fire extinguishing purposes having a mixing chamber, at least one discharge pipe leading from said mixing chamber transversely, conduits extending into said chamber in axial alignment, the outlet ends of said conduits being situated between the ends and centre of said chamber so that jets projected from said conduits impact substantially at the centre of said chamber.

EP-A2-0260564 teaches a process and apparatus for production of liquid reaction mixtures. The apparatus includes a mix head with a mixing chamber which receives reactants through nozzle openings. An impingement surface is placed between at least one of the nozzle openings of the mix head and the mixing chamber itself.

EP-A1-0852906 discloses a method of homogenising a liquid diary product involves passing the fluid through a multi-stage jet dispersion assembly at a pressure of between 10 and 100 bar, preferably 20 to 80 bar. The jet dispersion assembly has over 50, preferably over 100, jets, and the flow-speed through the jet hole is between 10 and 200 m/s.

EP-A1- 0863173 discloses an apparatus for producing stable finely divided polymer dispersions, having the features of the preamble of claim 1.

### SUMMARY OF THE INVENTION.

The present invention provides for a device for creating hydrodynamic cavitation in fluids comprising a flow-through channel for passing a hydrodynamic liquid where the flow-through channel has an outlet, a cavitation chamber situated within the flow-through channel where the cavitation chamber is defined by a wall and an exit orifice, and a restriction wall in physical communication with the wall and the flow-through channel to prevent the hydrodynamic liquid from exiting the flow-through channel before entering the first and second orifices. The wall includes a pair of opposing orifices wherein the first and second orifices share the same center-line and are in communication with the chamber and the first orifice has a diameter smaller than that of the second orifice. The device may further comprise a second cavitation chamber situated within the flow-through channel in series with the first cavitation chamber, the second cavitation chamber having a pair of opposing orifices that share the same center-line and have different diameters. Alternatively, the wall may further include a second pair of opposing orifices that share the same center-line and have different diameters.

Additionally, a method of creating hydrodynamic cavitation in fluids comprising: passing a hydrodynamic liquid through a flow-through channel having an outlet; providing a cavitation chamber situated within the flow-through channel having a wall and an exit orifice; directing the liquid through the first orifice to create a first liquid jet; directing the liquid through the second orifice to create a second liquid jet; creating a high shear intensity vortex contact layer when the first liquid jet interacts with and penetrates the second liquid jet; and creating and collapsing cavitation caverns and bubbles in the high shear intensity vortex contact layer. The wall includes a pair of opposing orifices wherein the first orifice and the second orifice share the same center-line and are in communication with the chamber and the first orifice has a diameter smaller than that of the second orifice. The method may further comprise: directing the liquid exiting from the exit orifice of the chamber towards a second cavitation chamber situated downstream of the chamber in the flow-through channel; directing the liquid through the first orifice of the second cavitation chamber to create a third liquid jet; directing the liquid through the second orifice of the second cavitation chamber to create a fourth liquid jet; creating a second high shear intensity vortex contact layer when the third liquid jet interacts with and penetrates the fourth liquid jet; and creating and collapsing cavitation caverns and bubbles in the second high shear intensity vortex contact layer. The second cavitation chamber includes a wall having a pair of opposing orifices disposed therein wherein the first orifice and the second orifice share the same center-line and are in communication with the second chamber and the first orifice has a diameter smaller than that of the second orifice. Alternatively, the method may further comprise: directing the hydrodynamic liquid through a third orifice in the wall of the chamber to create a third liquid jet; directing the liquid through a fourth orifice in the wall of the chamber opposite the third orifice to create a fourth liquid jet, the third and fourth orifices share the same center-line and the third orifice has a diameter that is smaller than the fourth orifice; creating a second high shear intensity vortex contact layer when the third liquid jet interacts with and penetrates the fourth liquid jet; and creating and collapsing cavitation caverns and bubbles in the second high shear intensity vortex contact layer.

### BRIEF DESCRIPTION OF THE DRAWINGS

These and other features, aspects, and advantages of the present invention will become better understood with regard to the following description, appended claims, and accompanying drawings where:
FIG. 1 is a longitudinal cross-section of a first embodiment of the device according to the present invention wherein the device comprises a flow-through channel that includes a cavitation chamber having two opposed jetting orifices that empty into the chamber.
FIG. 2 is a longitudinal cross-section of an illustrative embodiment of the device according to the present invention wherein two opposed jetting orifices are provided in a flow-through channel wherein the two opposed jetting orifices are the only two inlets.
FIG. 3 is a longitudinal cross-section of an illustrative embodiment of the device according to the present invention wherein two opposed jetting orifices are provided in a flow-through channel having an inlet wherein the two opposed jetting orifices are secondary inlets.
FIG. 4 is a modification of the first embodiment of the device according to the present invention wherein the device comprises three pairs of opposing jetting orifices.
FIG. 5 is a modification of the first embodiment of the device according to the present invention wherein the device further comprises a second cavitation chamber situated in the flow-through channel in series with the first cavitation chamber.

### DESCRIPTION OF THE PREFERRED EMBODIMENTS

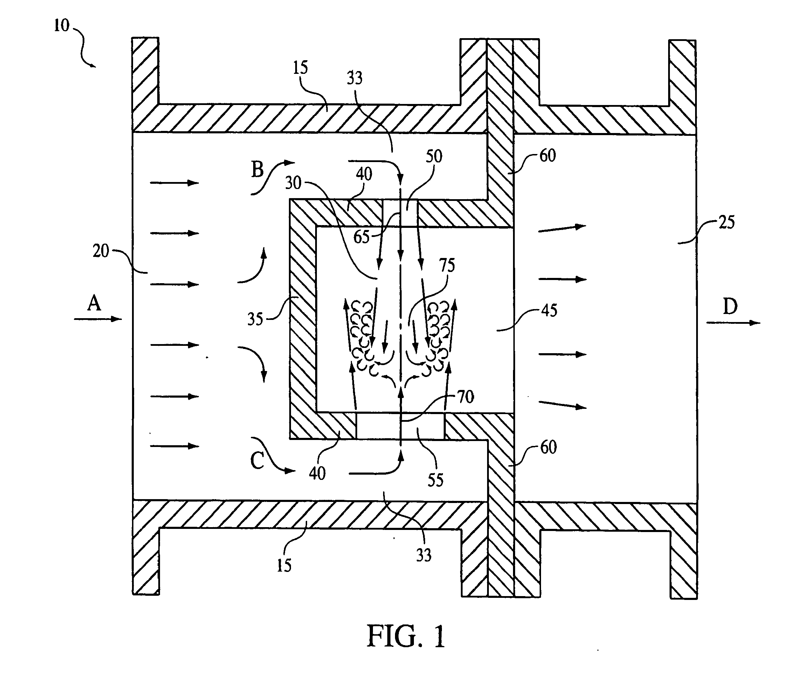

Referring now to the drawings wherein the showings are for purposes of illustrating various embodiments of the present invention only and not for purposes of limiting the same, FIG. 1 illustrates a longitudinal cross-sectional view of a first embodiment of the device 10 comprising a flow-through channel 15 having an inlet 20 and an outlet 25. Situated within the flow-through channel 15 is a cylindrical cavitation chamber 30 defined by a front wall 35 perpendicular to the flow-through channel 15, a wall 40 parallel to the flow-through channel 15, and an exit orifice 45 in communication with the outlet 25. The arrangement of the cavitation chamber 30 within the flow-through channel 15 creates an annular opening 33. Wall 40 has a first jetting orifice 50 and a second jetting orifice 55 oriented directly opposite the first jetting orifice 50 such that the first jetting orifice 50 and the second jetting orifice 55 directly face each other and share the same center-line X. The diameter of the first jetting orifice 50 is smaller than the diameter of the second jetting orifice 55. The cavitation chamber 30 also includes a flange 60 in communication with wall 40 and the flow-through channel 15 to direct fluid into the cavitation chamber 30 and restrict fluid from exiting the flow-through channel without being directed into the first jetting orifice 50 or second jetting orifice 55.

In operation, a hydrodynamic liquid stream moves along the direction, indicated by arrow A, through the inlet 20 and flows into flow-through channel 15. As the liquid stream approaches the front wall 35, the liquid stream is directed towards the annular opening 33. One portion of the liquid stream, indicated by arrow B, passes through the annular opening 33 and enters the first jetting orifice 50 forming a high velocity liquid jet 65 (hereinafter referred to as "smaller liquid jet 65" because this liquid jet exits the smaller diameter jetting orifice 50). Additionally, the other portion of the liquid stream, indicated by arrow C, passes through the annular opening 33 and enters the second jetting orifice 55 forming a high velocity liquid jet 70 (hereinafter referred to as "larger liquid jet 70" because this liquid jet exits the larger diameter jetting orifice 55).

Both smaller liquid jet 65 and larger liquid jet 70 flow into chamber 30 where they impinge along center-line X. Once the smaller liquid jet 65 and the larger liquid jet 70 impinge, smaller liquid jet 65 penetrates and interacts with larger liquid jet 70 thereby creating a high shear intensity vortex contact layer 75 between the liquid jets 65, 70. Cavitation caverns and bubbles are created in the high shear intensity vortex contact layer 75. During the collapse of cavitation caverns and bubbles, high localized pressures, up to 1000 MPa, arise and the level of energy dissipation in the flow-through channel 205 attains a magnitude in the range of 1¹⁰ - 1¹⁵ watt/kg. Under these physical conditions in the liquid, on the boundary of the bubble and inside the bubble itself in the gas phase, chemical reactions proceed such as oxidation, disintegration, synthesis, etc. After the cavitation bubbles collapse, the liquid is transported from the cavitation chamber 30 through the exit orifice 45 and exits the outlet 25, indicated by arrow D.

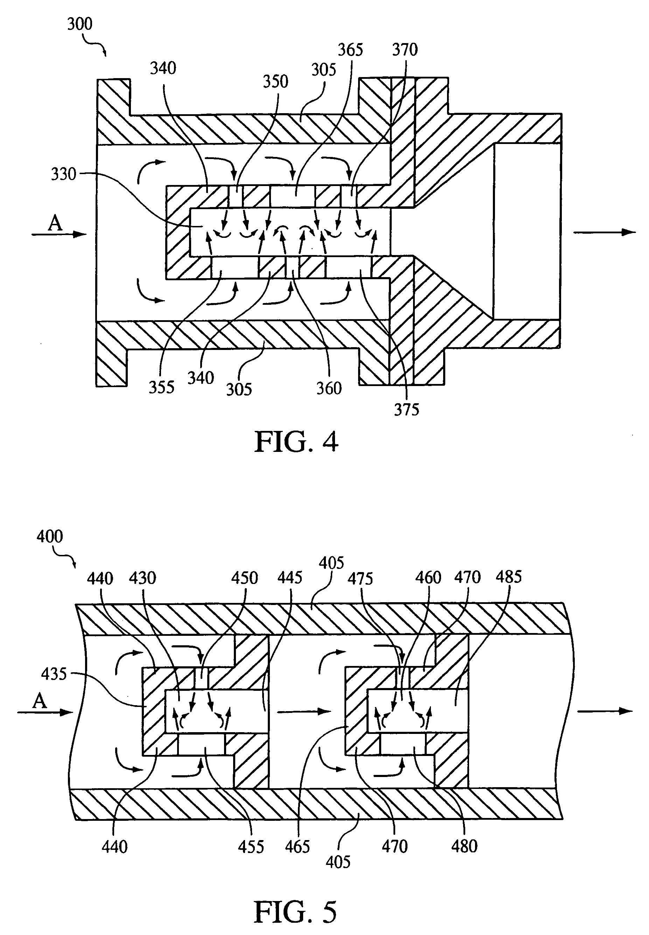

Although the first embodiment includes only one pair of opposing jetting orifices, it is possible to provide two or more pairs of opposing jetting orifices within the wall 340 and in communication with the chamber 330. As in the case of the first embodiment, the first opposing jetting orifice of each pair has a diameter smaller than that of the second opposing jetting orifice. This alternate design is shown as device 300 in FIG. 4, with arrow A representing the flow of hydrodynamic fluid through the flow-through channel 305. Wall 340 includes a first pair of opposing jetting orifices 350, 355, a second pair of opposing jetting orifices 360, 365, and a third pair of opposing jetting orifices 370, 375. The device 300 is structurally and functionally identical to the device 10 of the first embodiment, except for the addition of two pairs of opposing jetting orifices 370, 375.

Although the first embodiment includes only one cavitation chamber 30, it is possible to provide two or more cavitation chambers in series within the flow-through chamber. This alternate design is shown as device 400 in FIG. 5, with arrow A representing the flow of hydrodynamic fluid through the flow-through channel 405. The device 400 includes a first cavitation chamber 430 defined by a front wall 435, a wall 440 having a pair of opposing jetting orifices 450, 455, and an exit orifice 445. Additionally, the device 400 includes a second cavitation chamber 460 defined by a front wall 465, a wall 470 having a pair of opposing jetting orifices 475, 480, and an exit orifice 485. The device 400 is structurally and functionally identical to the device 10 of the first embodiment, except for the addition of the second chamber 460.

Furthermore, although the preferred cavitation chamber 30 is cylindrical in shape, it is contemplated that any shape may be possible provided that the liquid flow is permitted to enter the cavitation chamber 30. Such shapes may include cubical, conical, spherical, semi-spherical, or rectangular.

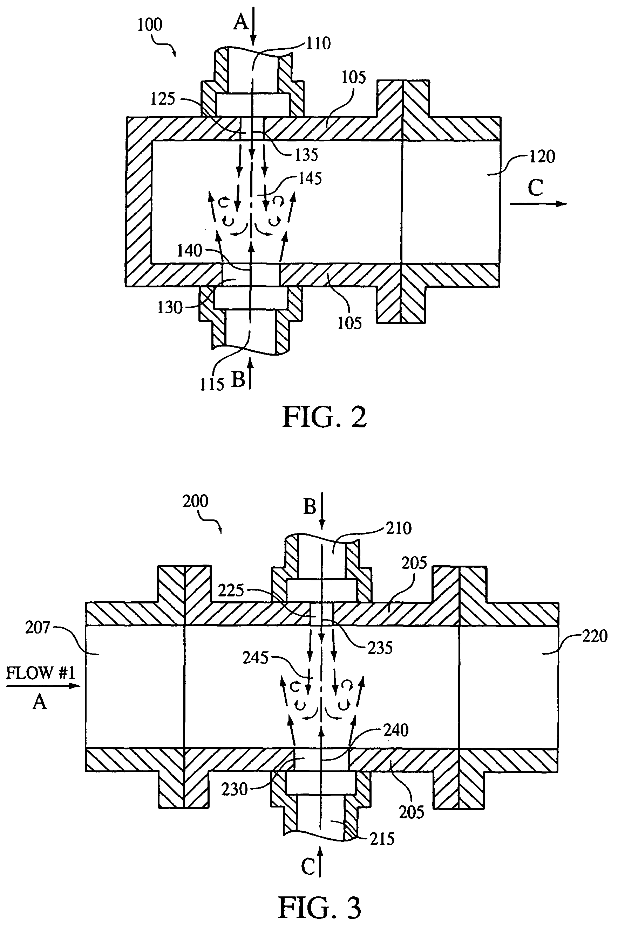

FIG. 2 represents an illustrative embodiment according to the present invention. FIG. 2 illustrates a longitudinal cross-sectional view of the device 100 comprising a flow through channel 105 having a first inlet 110, a second inlet 115, and an outlet 120. The first inlet 110 includes a first jetting orifice 125 and the second inlet 115 includes a second jetting orifice 130. The first jetting orifice 125 is oriented directly opposite the second jetting orifice 130 such that the first jetting orifice 125 and the second jetting orifice 130 directly face each other and share the same center-line X. The diameter of the first jetting orifice 125 is smaller than the diameter of the second jetting orifice 130.

In this embodiment, a first hydrodynamic liquid stream, indicated by arrow A, enters the first inlet 110 and passes through the first jetting orifice 125 forming a high velocity liquid jet 135 (hereinafter referred to as "smaller liquid jet 135" because this liquid jet exits the smaller diameter jetting orifice 125) that flows into flow-through channel 105. Additionally, a second hydrodynamic liquid stream, indicated by arrow B, enters the second inlet 115 and passes through the second jetting orifice 130 forming a high velocity liquid jet 140 (hereinafter referred to as "larger liquid jet 140" because this liquid jet exits the larger diameter jetting orifice 130) that flows into flow-through channel 105. Both the smaller liquid jet 135 and the larger liquid jet 140 flow into the flow-through channel 105 where they impinge along center-line X. Once the smaller liquid jet 135 and the larger liquid jet 140 impinge, smaller liquid jet 135 penetrates and interacts with larger liquid jet 140 thereby creating a high shear intensity vortex contact layer 145 between the liquid jets 135, 140. Cavitation caverns and bubbles are created in the high shear intensity vortex contact layer 145. During the collapse of cavitation caverns and bubbles; high localized pressures, up to 1000 MPa, arise and the level of energy dissipation in the flow-through channel 205 attains a magnitude in the range of 1¹⁰ *-* 1¹⁵ watt/kg. Under these physical conditions in the liquid, on the boundary of the bubble and inside the bubble itself in the gas phase, chemical reactions proceed such as oxidation, disintegration, synthesis, etc. After the cavitation bubbles collapse, the liquid is transported from the flow-through channel 105 to the outlet 120 indicated by arrow C.

The device 100 is capable of receiving liquids having the same or different characteristics, which provides the operator with the ability to modify and control the desired cavitation effects. It is important to note that the first and second hydrodynamic liquid streams discussed above comprise a first and second liquid, respectively. The first and second liquids may be the same liquid, different liquids, or any combination thereof. Each liquid may be a pure liquid, a liquid containing solid particles, a liquid containing droplets, an emulsion of multiple materials, a slurry, or a suspension. Additionally, each liquid may be introduced to the device under different physical conditions and chemical compositions. Such physical conditions may include pressure, temperature, viscosity, and density. Such chemical compositions may include different chemical formulations and concentrations.

Furthermore, although the second embodiment illustrates a flow-through channel having a pair of opposing jetting orifices disposed therein, it is contemplated that any chamber may be provided with a pair of opposing jetting orifices to practice the present invention. Such chambers may include tank, a pipe, a spherical vessel, a cylindrical vessel such as a drum, or any other desired shape. It is also contemplated that any size and shape may be possible provided that the liquid flow is permitted to enter the chamber. Such shapes may include cubical, conical, spherical, semi-spherical, or rectangular.

FIG. 3 represents an illustrative embodiment. FIG. 3 illustrates a longitudinal cross-sectional view of the device 200 comprising a flow through chamber 205 having an inlet 207 and an outlet 220. The flow-through channel also includes a first ancillary inlet 210 and a second ancillary inlet 215. The first ancillary inlet 210 includes a first jetting orifice 225 and the second ancillary inlet 215 includes a second jetting orifice 230. The first jetting orifice 225 is oriented directly opposite the second jetting orifice 230 such that the first jetting orifice 225 and the second jetting orifice 230 directly face each other and share the same center-line X. The diameter of the first jetting orifice 225 is smaller than the diameter of the second jetting orifice 230.

In this embodiment, a first hydrodynamic liquid stream moves along the direction, indicated by arrow A, through the inlet 207 and flows into the flow-through channel 205. As the liquid stream is passing through the flow-through channel 205, a second hydrodynamic liquid stream, indicated by arrow B, enters the first ancillary inlet 210 and passes through the first jetting orifice 225 forming a high velocity liquid jet 235 (hereinafter referred to as "smaller liquid jet 235" because this liquid jet exits the smaller diameter jetting orifice 225) that flows into flow-through channel 205. Additionally, a third hydrodynamic liquid stream, indicated by arrow C, enters the second ancillary inlet 215 and passes through the second jetting orifice 230 forming a high velocity liquid jet 240 (hereinafter referred to as "larger liquid jet 240" because this liquid jet exits the larger diameter jetting orifice 230) that flows into flow-through channel 205. Both the smaller liquid jet 235 and the larger liquid jet 240 flow into the flow-through chamber 205 where they impinge along center-line X. Once the smaller liquid jet 235 and the larger liquid jet 240 impinge, smaller liquid jet 235 penetrates and interacts with larger liquid jet 240 thereby creating a high shear intensity vortex contact layer 145 between the liquid jets 235, 240 and the first liquid flow. Cavitation caverns and bubbles are created in the high shear intensity vortex contact layer 245. During the collapse of cavitation caverns and bubbles, high localized pressures, up to 1000 MPa, arise and the level of energy dissipation in the flow-through channel 205 attains a magnitude in the range of 1¹⁰ - 1¹⁵ watt/kg. Under these physical conditions in the liquid, on the boundary of the bubble and inside the bubble itself in the gas phase, chemical reactions proceed such as oxidation, disintegration, synthesis, etc. After the cavitation bubbles collapse, the liquid stream is transported from the flow-through channel to the outlet 220, indicated by arrow D.

The device 200 is capable of receiving liquids having the same or different characteristics, which provides the operator with the ability to modify and control the desired cavitation effects. It is important to note that the first and second hydrodynamic liquid streams discussed above comprise a first and second liquid, respectively. The first and second liquids may be the same liquid, different liquids, or any combination thereof. Each liquid may be a pure liquid, a liquid containing solid particles, a liquid containing droplets, an emulsion of multiple materials, a slurry, or a suspension. Additionally, each liquid may be introduced to the device under different physical conditions and chemical compositions. Such physical conditions may include pressure, temperature, viscosity, and density. Such chemical compositions may include different chemical formulations and concentrations.

Furthermore, although the third embodiment illustrates a flow-through channel having a pair of opposing jetting orifices disposed therein, it is contemplated that any chamber may be provided with a pair of opposing jetting orifices to practice the present invention. Such chambers may include tank, a pipe, a spherical vessel, a cylindrical vessel such as a drum, or any other desired shape. It is also contemplated that any size and shape may be possible provided that the liquid flow is permitted to enter the chamber. Such shapes may include cubical, conical, spherical, semi-spherical, or rectangular.

## Claims

1. A device for creating hydrodynamic cavitation in fluids comprising:
a cavitation chamber (30, 330, 430), said cavitation chamber defined by a wall and an exit orifice (45, 445, 485) wherein:
said wall includes a pair of opposing orifices wherein the first (50, 350, 370, 450, 475) and second orifices (55, 355, 375, 455, 480) share the same center-line and are in communication with the chamber, and wherein the device further comprises:
a flow-through channel (15, 305, 405) for passing a hydrodynamic liquid, said flow-through channel having an outlet (25), wherein said exit orifice is in communication with said outlet, and;
a restriction wall (60, 470) in physical communication with said wall and said flow-through channel to prevent the hydrodynamic liquid from exiting the flow-through channel before entering said first and second orifices, **characterized in that** said first orifice has a diameter smaller than that of said second orifice.

2. The device of claim 1, further comprising a second cavitation chamber (460) situated within said flow-through channel in series with the first cavitation chamber (430), said second cavitation chamber having a pair of opposing orifices (450, 455) that share the same center-line and have different diameters.

3. The device of claim 1, wherein the wall includes a second pair of opposing orifices (360, 365) that share the same center-line and have different diameters.

4. A method of creating hydrodynamic cavitation in fluids **characterized by**:
passing a hydrodynamic liquid through a flow-through channel having an outlet;
providing a cavitation chamber situated within said flow-through channel having a wall and an exit orifice wherein:
said wall includes a pair of opposing orifices wherein the first orifice and the second orifice share the same center-line and are in communication with said chamber and said first orifice has a diameter smaller than that of said second orifice, and
said exit orifice is in communication with said outlet; directing said liquid through said first orifice to create a first liquid jet; directing said liquid through said second orifice to create a second liquid jet;
creating a high shear intensity vortex contact layer when said first liquid jet interacts with and penetrates said second liquid jet; and
creating and collapsing cavitation caverns and bubbles in said high shear intensity vortex contact layer.

5. The method of claim 4, further comprising:
directing the liquid exiting from the exit orifice of said chamber towards a second cavitation chamber situated downstream of said chamber in said flow-through channel;
said second cavitation chamber includes a wall having a pair of opposing orifices disposed therein wherein the first orifice and the second orifice share the same center-line and are in communication with said second chamber and said first orifice has a diameter smaller than that of
said second orifice, and
directing said liquid through said first orifice of said second cavitation chamber to create a third liquid jet;
directing said liquid through said second orifice of said second cavitation chamber to create a fourth liquid jet;
creating a second high shear intensity vortex contact layer when said third liquid jet interacts with and penetrates said fourth liquid jet; and
creating and collapsing cavitation caverns and bubbles in said second high shear intensity vortex contact layer.

6. The method of claim 4, further comprising:
directing said hydrodynamic liquid through a third orifice in said wall of said chamber to create a third liquid jet; said
directing said liquid through a fourth orifice in said wall of said chamber opposite said third orifice to create a fourth liquid jet, said third and fourth orifices share the same center-line and said third orifice has a diameter that is smaller than said fourth orifice;
creating a second high shear intensity vortex contact layer when said third liquid jet interacts with and penetrates said fourth liquid jet; and
creating and collapsing cavitation caverns and bubbles in said second high shear intensity vortex contact layer.

## Patentansprüche

1. Vorrichtung zur Erzeugung von hydrodynamischer Kavitation in Fluiden, enthaltend:
eine Kavitationskammer (30,330,430), die durch eine Wand und eine Austrittsöffnung (45,445,485) bestimmt ist, wobei:
die Wand ein Paar gegenüberliegender Öffnungen aufweist, wobei die erste Öffnung (50,350,370,450,475) und die zweite Öffnung (55,355,375,455,480) dieselbe Mittenlinie einander teilen und mit der Kammer in Verbindung sind und die Vorrichtung weiterhin enthält:
einen Durchflusskanal (15,305,405) zum Hindurchleiten einer hydrodynamischen Flüssigkeit, der einen Auslass (25) hat, wobei die Austrittsöffnung mit diesem Auslass in Verbindung ist, und
eine Einengungswand (60,470), die mit der Wand und dem Durchflusskanal in physikalischer Verbindung ist, um zu verhindern, dass die hydrodynamische Flüssigkeit aus dem Durchflusskanal austritt, bevor sie in die ersten und zweiten Öffnungen eintritt, **dadurch gekennzeichnet, dass**
die erste Öffnung einen Durchmesser hat, der kleiner als der der zweiten Öffnung ist.

2. Vorrichtung nach Anspruch 1, weiterhin enthaltend eine zweite Kavitationskammer (460), die innerhalb des Durchflusskanals in Serie mit der ersten Kavitationskammer (430) angeordnet ist und die ein Paar gegenüberliegender Öffnungen (450,455) hat, die dieselbe Mittenlinie teilen und unterschiedliche Durchmesser haben.

3. Vorrichtung nach Anspruch 1, bei der die Wand ein zweites Paar gegenüberliegender Öffnungen (360,365) enthält, die dieselbe Mittenlinie teilen und unterschiedliche Durchmesser haben.

4. Verfahren zum Erzeugen hydrodynamischer Kavitation in Flüssigkeiten, **gekennzeichnet durch**:
Hindurchleiten einer hydrodynamischen Flüssigkeit **durch** einen Durchflusskanal, der einen Auslass hat;
Anordnen einer Kavitationskammer innerhalb des Durchflusskanals, die eine Wand und eine Austrittsöffnung hat, wobei die Wand ein Paar gegenüberliegender Öffnungen hat, von denen die erste Öffnung und die zweite Öffnung dieselbe Mittenlinie teilen und mit der Kammer in Verbindung sind und die erste Öffnung einen Durchmesser hat, der kleiner als der der zweiten Öffnung ist, und die Austrittsöffnung mit dem Auslass in Verbindung ist;
Richten der Flüssigkeit **durch** die erste Öffnung, um einen ersten Flüssigkeitsstrahl zu erzeugen;
Richten der Flüssigkeit **durch** die zweite Öffnung, um einen zweiten Flüssigkeitsstrahl zu erzeugen;
Erzeugen einer Wirbelkontaktschicht hoher Scherintensität, wenn der erste Flüssigkeitsstrahl mit dem zweiten Flüssigkeitsstrahl zusammenwirkt und diesen durchdringt; und
Erzeugen und Kollabieren von Kavitationskavernen und -bläschen in der Wirbelkontaktschicht hoher Scherintensität.

5. Verfahren nach Anspruch 4, weiterhin enthaltend:
Richten der aus der Austrittsöffnung er Kammer austretenden Flüssigkeit auf eine zweite Kavitationskammer, die stromabwärts der Kammer in dem Durchflusskanal gelegen ist; wobei die zweite Kavitationskammer eine Wand enthält, die ein Paar gegenüberliegender Öffnungen hat, die darin angeordnet sind und von denen die erste Öffnung und die zweite Öffnung dieselbe Mittenlinie teilen und mit der zweiten Kammer in Verbindung sind und die erste Öffnung einen Durchmesser hat, der kleiner als der der zweiten Öffnung ist, und
Richten der Flüssigkeit durch die erste Öffnung der zweiten Kavitationskammer, um einen dritten Flüssigkeitsstrahl zu erzeugen;
Richten der Flüssigkeit durch die zweite Öffnung der zweiten Kavitationskammer, um einen vierten Flüssigkeitsstrahl zu erzeugen;
Erzeugen einer zweiten Wirbelkontaktschicht hoher Scherintensität, wenn der dritte Flüssigkeitsstrahl mit dem vierten Flüssigkeitsstrahl zusammenwirkt und diesen durchdringt; und
Erzeugen und Kollabieren von Kavitationskavernen und -bläschen in der zweiten Wirbelkontaktschicht hoher Scherintensität.

6. Verfahren nach Anspruch 4, weiterhin enthaltend:
Richten der hydrodynamischen Flüssigkeit durch eine dritte Öffnung in der Wand der Kammer, um einen dritten Flüssigkeitsstrahl zu erzeugen; und
Richten der Flüssigkeit durch eine vierte Öffnung in der Wand der Kammer gegenüber der dritten Öffnung, um einen vierten Flüssigkeitsstrahl zu erzeugen, wobei die dritten und vierten Öffnungen dieselbe Mittenlinie teilen und die dritte Öffnung einen Durchmesser hat, der kleiner als der der vierten Öffnung ist;
Erzeugen einer zweiten Wirbelkontaktschicht hoher Scherintensität, wenn der dritte Flüssigkeitsstrahl mit dem vierten Flüssigkeitsstrahl zusammenwirkt und diesen durchdringt; und
Erzeugen und Kollabieren von Kavitationskavernen und -bläschen in der zweiten Wirbelkontaktschicht hoher Scherintensität.

## Revendications

1. Dispositif de création de cavitation hydrodynamique dans des fluides comprenant :
une chambre de cavitation (30, 330, 430), ladite chambre de cavitation étant définie par une paroi et un orifice de sortie (45, 445, 485) où :
ladite paroi comprend une paire d'orifices opposés où les premier orifice (50, 350, 370, 450, 475) et deuxième orifice (55, 355, 375, 455, 480) partagent la même ligne médiane et sont en communication avec la chambre, et lequel dispositif comprend en outre :
un canal d'écoulement (15, 305, 405) pour faire passer un liquide hydrodynamique, ledit canal d'écoulement ayant une sortie (25), où ledit orifice de sortie est en communication avec ladite sortie, et ;
une paroi de restriction (60, 470) en communication physique avec ladite paroi et ledit canal d'écoulement pour empêcher le liquide hydrodynamique de sortir du canal d'écoulement avant d'entrer dans lesdits premier et deuxième orifices, **caractérisé en ce que** ledit premier orifice a un diamètre inférieur à celui dudit deuxième orifice.

2. Dispositif selon la revendication 1, comprenant en outre une deuxième chambre de cavitation (460) située dans ledit canal d'écoulement en série avec la première chambre de cavitation (430), ladite deuxième chambre de cavitation ayant une paire d'orifices opposés (450, 455) qui partagent la même ligne médiane et ont des diamètres différents.

3. Dispositif selon la revendication 1, dans lequel la paroi comprend une deuxième paire d'orifices opposés (360, 365) qui partagent la même ligne médiane et ont des diamètres différents.

4. Procédé de création de cavitation hydrodynamique dans des fluides **caractérisé par** les étapes consistant à :
faire passer un liquide hydrodynamique à travers un canal d'écoulement ayant une sortie ;
fournir une chambre de cavitation située dans ledit canal d'écoulement ayant une paroi et un orifice de sortie où :
ladite paroi comprend une paire d'orifices opposés où le premier orifice et le deuxième orifice partagent la même ligne médiane et sont en communication avec ladite chambre et ledit premier orifice a un diamètre inférieur à celui dudit deuxième orifice, et
ledit orifice de sortie est en communication avec ladite sortie ;
diriger ledit liquide à travers ledit premier orifice pour créer un premier jet de liquide ;
diriger ledit liquide à travers ledit deuxième orifice pour créer un deuxième jet de liquide ;
créer une couche de contact de tourbillons à intensité de cisaillement élevée lorsque ledit premier jet de liquide interagit et pénètre ledit deuxième jet de liquide ; et
créer et éliminer des cavités de cavitation et des bulles dans ladite couche de contact de tourbillons à intensité de cisaillement élevée.

5. Procédé selon la revendication 4, comprenant en outre les étapes consistant à
diriger le liquide sortant de l'orifice de sortie de ladite chambre vers une deuxième chambre de cavitation située en aval de ladite chambre dans ledit canal d'écoulement ;
ladite deuxième chambre de cavitation comprenant une paroi ayant une paire d'orifices opposés disposés dans celle-ci où le premier orifice et le deuxième orifice partageant la même ligne médiane et sont en communication avec ladite deuxième chambre et ledit premier orifice ayant un diamètre inférieur à celui dudit deuxième orifice, et
diriger ledit liquide à travers ledit premier orifice de ladite deuxième chambre de cavitation pour créer un troisième et de liquide ;
diriger ledit liquide à travers ledit deuxième orifice de ladite deuxième chambre de cavitation pour créer un quatrième jet de liquide ;
créer une deuxième couche de contact de tourbillons à intensité de cisaillement élevée lorsque ledit troisième jet de liquide interagit et pénètre ledit quatrième jet de liquide ; et
créer et éliminer des cavités de cavitation et des bulles dans ladite deuxième couche de contact de tourbillons à intensité de cisaillement élevée.

6. Procédé selon la revendication 4, comprenant en outre les étapes consistant à
diriger ledit liquide hydrodynamique à travers un troisième orifice dans ladite paroi de ladite chambre pour créer un troisième jet de liquide ; et
diriger ledit liquide à travers un quatrième orifice dans ladite paroi de ladite chambre en face dudit troisième orifice pour créer un quatrième jet de liquide, lesdits troisième et quatrième orifices partagent la même ligne médiane et ledit troisième orifice a un diamètre qui est inférieur à celui dudit quatrième orifice ;
créer une deuxième couche de contact de tourbillons à intensité de cisaillement élevée lorsque ledit troisième et de liquide interagit et pénètre ledit quatrième et de liquide ; et
créer et éliminer des cavités de cavitation et des bulles dans ladite deuxième couche de contact de tourbillons à intensité de cisaillement élevée.
